# EUROPÄISCHE PATENTSCHRIFT

(11) **EP 4 477 048 B1**
(45) Veröffentlichungstag und Bekanntmachung des Hinweises auf die Patenterteilung: **17.06.2026**
(21) Anmeldenummer: 24168715.1
(22) Anmeldetag: 05.04.2024
(51) Int. Cl.: A01D 43/08, A01F 29/22

(54) **FELDHÄCKSLER**
CHAFF CUTTER
RÉCOLTEUSE-HACHEUSE

(30) Priorität: 14.06.2023 DE 102023115523
(43) Veröffentlichungstag der Anmeldung: 18.12.2024
(73) Patentinhaber: CLAAS Selbstfahrende Erntemaschinen GmbH, 33428 Harsewinkel (DE)
(72) Erfinder: Neitemeier, Dennis, 59510 Lippetal (DE); Belau, Sven Carsten, 33332 Gütersloh (DE); Bönig, Ingo, 33330 Gütersloh (DE); Brune, Markus, 33428 Harsewinkel (DE); Klein-Helmkamp, Marwin, 49565 Bramsche (DE); Cord-Kruse, Christian, 48231 Warendorf (DE)
(74) Vertreter: CLAAS Gruppe

(56) Entgegenhaltungen:
- DE-A1- 102011 005 317
- DE-A1- 102019 112 965
- DE-A1- 102019 112 973
- US-A1- 2002 009 964

## Beschreibung

Die Erfindung betrifft einen Feldhäcksler gemäß dem Oberbegriff des Anspruchs 1. Feldhäcksler gemäß der Präambel des Anspruchs 1 sind aus DE 10 2019 112965 A1 sowie DE 10 2011 005317 A1 bekannt.

Feldhäcksler umfassen eine Häckseleinrichtung, die eine Häckseltrommel mit daran angeordneten, länglichen Häckselmessern sowie eine ortsfeste Gegenschneide aufweist. Das der Häckseltrommel zugeführte Erntegut wird durch das Zusammenwirken zwischen den Häckselmessern und der Gegenschneide gehäckselt, also zerkleinert.

Während des Häckselbetriebs kommt es zu einem Verschleiß der Häckseleinrichtung, der auf einen Verschleiß der Häckselmesser zurückgeht. Im Einzelnen kommt es zu einem verschleißbedingten Abtrag im Bereich der Schneidkanten der Häckselmesser, was zu einer Herabsetzung von Schnittqualität und Erntegutdurchsatz führt. Aus diesem Grund umfasst die Häckseleinrichtung weiterhin eine Schleifeinrichtung zum Schärfen der Häckselmesser. Die Schleifeinrichtung führt in regelmäßigen oder unregelmäßigen zeitlichen Abständen einen Schleifvorgang mit mehreren Schleifzyklen durch. Hierbei wird ein Schleifstein in axialer Richtung der Häckseltrommel an den Häckselmessern entlanggeführt. Ein Schleifzyklus entspricht hierbei einer Bewegung des Schleifsteins hin zu einem Ende der Häckseltrommel und einer anschließenden Bewegung zurück zum anderen Ende der Häckseltrommel.

Der im Erntebetrieb auftretende Verschleiß und die Schleifvorgänge machen ein Austauschen der Häckselmesser nach einer gewissen Betriebsdauer erforderlich. Nach dem Einbau neuer Häckselmesser wird ein Schleifvorgang durchgeführt, da die neuen Häckselmesser unterschiedliche Trommelradien aufweisen und somit die Häckseltrommel eine ungleiche Rundheit aufweist. Unterschiedliche Trommelradien bzw. eine ungleichmäßige Rundheit der Häckseltrommel führt dazu, dass sich für die jeweiligen Häckselmesser bei einer Rotation der Häckseltrommel unterschiedlich große Abstände zu der Gegenscheide ausbilden, sodass ein gewünschter Abstand der Häckseltrommel zu der Gegenschneide nicht kollisionsfrei einstellbar ist.

Um die Unterschiede zwischen den Häckselmessern zu minimieren und somit einen einheitlichen Trommelradius im Bereich der Häckselmesser herbeizuführen, werden die Messer eingeschliffen, bis ein gewisser Schwellwert der Messerunterschiede unterschritten wird. Hierfür werden die Häckselmesser in einem iterativen Verfahren geschliffen, wobei ein Bediener in einem ersten Schritt eine gewisse Anzahl an Schleifzyklen durchführt. In einem nächsten Schritt prüft der Bediener den Schleifzustand, in dem er ein Einzugsgehäuse des Feldhäckslers öffnet und die Messer begutachtet. Diese Schritte werden bis zum Erreichen eines gewünschten Schleifzustands wiederholt.

Bei diesem Verfahren besteht für den Bediener ein Konflikt zwischen dem zeitlichen Aufwand und der Genauigkeit des Schleifvorgangs, denn je größer die Anzahl der Schleifzyklen pro Iteration gewählt werden, desto ungenauer wird der gewünschte Zustand der Messer erreicht. Wird jedoch die Anzahl der Schleifenzyklen verringert, steigt zugleich der zeitliche Aufwand. Zusätzlich ist die Kabine nach jeder Iteration zu verlassen, damit das Einzugsgehäuse aufgeklappt werden kann und die Messer beurteilt werden können, indem die Trommel manuell gedreht wird.

Es ist deshalb Aufgabe der Erfindung, die beschriebenen Nachteile des Standes der Technik zu vermeiden und insbesondere einen Feldhäcksler mit einer Häckseleinrichtung zu schaffen, der den Prozess des Einschleifens der Häckselmesser vereinfacht.

Diese Aufgabe wird erfindungsgemäß durch die kennzeichnenden Merkmale des Anspruchs 1 gelöst. Vorteilhafte Weiterbildungen sind Gegenstand der abhängigen Ansprüche.

Gemäß dem Anspruch 1 wird ein Feldhäcksler mit einer Häckseleinrichtung vorgeschlagen, wobei die Häckseleinrichtung zumindest eine Häckseltrommel und dieser zugeordnete Häckselmesser zum Zerkleinern von Erntegut, eine Messerschleifeinrichtung zum Schärfen der Häckselmesser, und einer Sensoranordnung umfasst, wobei zwischen der Sensoranordnung und der Häckseltrommel ein Luftspalt ausgebildet ist, wobei bei einer Drehung der Häckseltrommel zumindest ein Teil der Häckselmesser den Luftspalt passiert und in der Sensoranordnung ein Spannungssignal induziert, wobei der Feldhäcksler eine Auswerteinheit umfasst, die in signalübertragender Weise mit der Sensoranordnung verbunden ist, wobei die Auswerteinheit derart eingerichtet ist, sodass diese mittels des Spannungssignals eine Kenngröße für eine Rundheit der Häckseltrommel ermittelt.

Die Erfindung hat viele Vorteile. Ein Einschleifvorgang der Häckselmesser wird dadurch wesentlich erleichtert, dass eine Beurteilung der Häckselmesser hinsichtlich der Rundheit der Häckseltrommel durch den Bediener nicht erforderlich ist. Das ermitteln einer Kenngröße für die Rundheit kann zum einen einem Bediener des Feldhäckslers bei einem Einschleifvorgang der Häckselmesser, insbesondere mittels einer Anzeigeneinheit, bereitgestellt werden. Anhand dieser Kenngröße kann der Bediener von der Fahrerkabine aus entscheiden, ob weitere Schleifzyklen bis zum Erreichen einer gewünschten Rundheit der Häckseltrommel erforderlich sind. Ferner ist die Kenngröße auch für eine automatische Regelung des Einschleifvorgangs verwendbar.

Zum Ermitteln der Kenngröße für die Rundheit der Häckseltrommel ist es besonders vorteilhaft, wenn das Spannungssignal eine Mehrzahl von Pulsen umfasst, wobei vorzugsweise das Maximum eines Pulses von dem Abstand eines Häckselmessers zu der Sensoranordnung abhängig ist.

Gemäß einer vorteilhaften Weiterbildung entspricht die Kenngröße einer Standartabweichung der Maxima der Mehrzahl der Pulse. Eine derartige Kenngröße ist im besonderen Maße geeignet, um die Rundheit der Häckseltrommel zu beschreiben.

Gemäß einer weiteren vorteilhaften Weiterbildung kann die Auswerteinheit in signalübertragender Weise mit einer Steuereinrichtung verbunden sein oder die Auswerteinheit kann als Steuereinrichtung ausgebildet sein, wobei die Steuereinrichtung die Messerschleifeinrichtung bei einem Schleifvorgang, insbesondere beim Einschleifen der Häckselmesser, derart ansteuert, sodass diese den Schleifvorgang der Häckselmesser automatisch beendet, sobald die Kenngröße einen Schwellwert erreicht oder unterschreitet. Hierdurch kann ein Bediener des Feldhäckslers bei einem Einschleifvorgang der Häckselmesser entlastet werden, da die Steuerungseinrichtung selbsttätig die erforderlichen Schleifzyklen bis zum Erreichen des gewünschten Schwellwerts bzw. der gewünschten Rundheit der Häckseltrommel durchführt und den Schleifvorgang automatisch beendet.

Besonders vorteilhaft ist es, wenn die Steuereinrichtung zum Ermitteln einer Anzahl von Schleifzyklen bis zum Erreichen des Schwellwerts eingerichtet ist. Die Anzahl der Schleifzyklen kann einem Bediener, insbesondere mittels einer Anzeigeeinheit, zur Verfügung gestellt werden. Sollte die Steuereinrichtung eine besonders hohe Anzahl an erforderlichen Schleifzyklen bis zum Erreichen des Schwellwerts ermitteln, kann dies ein Hinweis für einen Montagefehler eines oder mehrerer Häckselmesser sein. In diesem Fall kann der Bediener eine entsprechende Korrektur vornehmen.

Zur Ermittlung der erforderlichen Schleifzyklen bis zum Erreichen des Schwellwerts sieht eine vorteilhafte Ausgestaltung vor, dass ein Kennfeld in der Steuerungseinrichtung hinterlegt ist, wobei das Kennfeld die Kenngröße für die Rundheit der Häckseltrommel in Abhängigkeit von den Schleifzyklen der Messerschleifeinrichtung beschreibt.

Die vorliegende Erfindung wird nachstehend anhand eines in den Zeichnungen dargestellten Ausführungsbeispiels näher erläutert.
- Figur 1: eine schematische Darstellung eines selbstfahrenden Feldhäckslers in Seitenansicht;
- Figur 2: eine Detailansicht des Feldhäckslers nach Figur 1 mit einer Schneidschärfendetektionseinrichtung;
- Figur 3: eine Detailansicht einer induktiven Sensoranordnung;
- Figur 4: ein mittels der Sensoranordnung gemäß Figur 3 ermitteltes Spannungssignal;
- Figur 5: ein Kennfeld, dass eine Kenngröße für eine Rundheit einer Häckseltrommel in Abhängigkeit von den Schleifzyklen einer Messerschleifeinrichtung beschreibt.

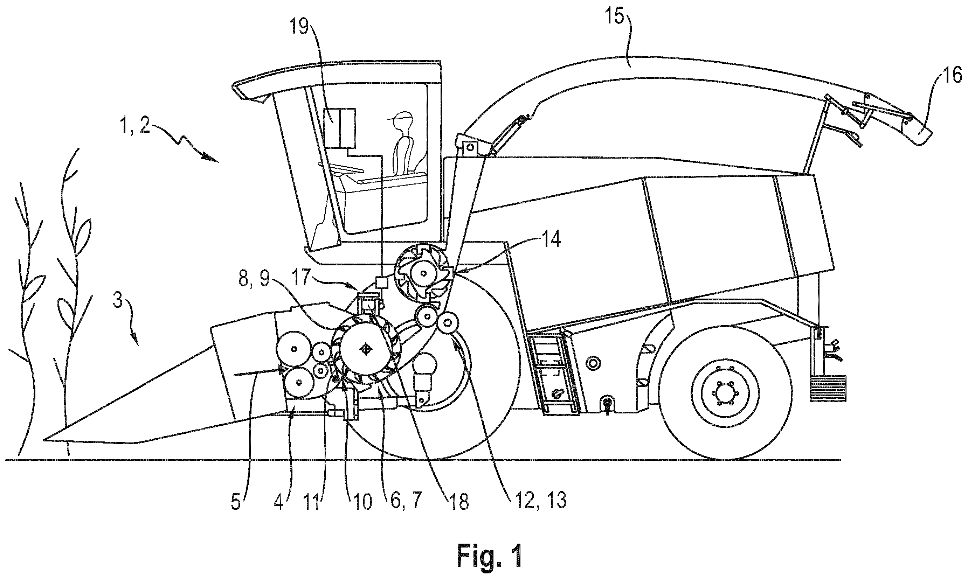

Figur 1 zeigt schematisch eine als Feldhäcksler 2 ausgeführte landwirtschaftliche Arbeitsmaschine 1, die in ihrem frontseitigen Bereich einen Erntevorsatz 3 aufnimmt. Im rückwärtigen Bereich des Erntevorsatzes 3 sind diesem sogenannte Einzugs- und Vorpresswalzen 4 zugeordnet, die den Erntegutstrom 5 aus dem Erntevorsatz 3 kommend annehmen, verdichten und in ihrem rückwärtigen Bereich an eine Häckseleinrichtung 6 übergeben. Die Häckseleinrichtung 6 umfasst eine Häckseltrommel 7, die mit Häckselmessern 8 einer Häckselmesseranordnung 9 bestückt ist. Die umlaufenden Häckselmesser 8 werden im Einzugsbereich 10 der Häckseltrommel 7 an einer sogenannten Gegenschneide 11, über die der zu zerkleinernde Erntegutstrom 5 gefördert wird, vorbeibewegt. Im rückwärtigen Bereich der Häckseltrommel 7 wird das zerkleinerte Erntegut 5 sodann entweder an eine als sogenannter Cracker 12 ausgeführte Nachzerkleinerungseinrichtung 13 oder direkt an eine Nachbeschleunigungseinrichtung 14 übergeben. Während die Nachzerkleinerungseinrichtung 13 die körnigen Bestandteile des Erntegutstromes 5, etwa Maiskörner, weiter zerkleinert beschleunigt der Nachbeschleuniger 14 den Erntegutstrom 5 in einer Weise, dass dieser durch einen Auswurfkrümmer 15 bewegt und endseitig im Bereich einer Auswurfklappe 16 aus dem Feldhäcksler 2 austreten und an ein nicht dargestelltes Transportfahrzeug übergeben werden kann. Zudem ist der Häckseltrommel 7 umfangseitig eine an sich bekannte und daher hier nicht im Detail beschriebene Messerschleifeinrichtung 17 zugeordnet, deren Schleifstein 18 horizontal über die Breite der Häckseltrommel 7 bewegbar ist, sodass jedes am Umfang der Häckseltrommel 7 positionierte Häckselmesser 8 schleifbar ist. Zwecks Aktivierung oder Deaktivierung des Messerschleifvorganges ist die Messerschleifeinrichtung 17 in signalübertragender Weise mit einer Steuereinrichtung 19 verbunden.

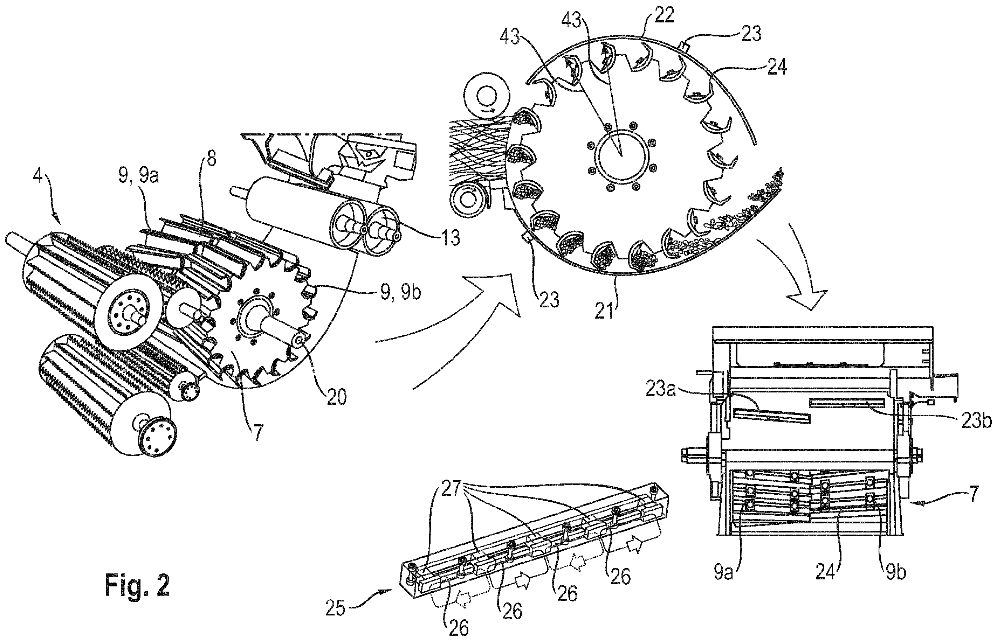

Gemäß Figur 2 umfasst die Häckselmesseranordnung 9 rechts- und linksseitige Häckselmesseranordnungen 9a, 9b, wobei jede Häckselmesseranordnung 9a, 9b eine Vielzahl am Umfang der Häckseltrommel 7 schräg zur Drehachse 20 der Häckseltrommel 7 positionierte Häckselmesser 8 umfasst. Die Häckseltrommel 7 wird untenseitig von einem vorzugsweise aus Edelstahl bestehenden Trommelboden 21 ummantelt. Obenseitig wird die Häckseltrommel 7 von einer vorzugsweise ebenfalls aus Edelstahl bestehenden Trommelrückwand 22 umschlossen. Eine Sensoranordnung 23 kann gemäß dem in Figur 2 dargestellten Ausführungsbeispiel entweder an der Trommelrückwand 22 oder am Trommelboden 21 positioniert sein. Es ist auch denkbar, dass zugleich sowohl am Trommelboden 21 als auch an der Trommelrückwand 22 eine Sensoranordnung 23 angeordnet ist. Unabhängig von der konkreten Positionierung sind jeder Häckseltrommel 7 zumindest 2 Sensoranordnungen 23a, 23b in der Weise zugeordnet, dass jeweils eine der Sensoranordnungen 23a, 23b der jeweils zugehörigen Häckselmesseranordnung 9a, 9b zugeordnet ist, wobei jede Sensoranordnung 23a, 23b die Schneidkante 24 des jeweiligen Häckselmessers 7 vollständig überdeckt, sodass jede Schneidkante 24 über ihrer gesamten Länge durch die jeweilige Sensoranordnung 23a, 23b detektiert werden kann. Weiter liegt es im Rahmen der Erfindung, dass die jeweilige Sensoranordnung 23a, 23b entweder parallel zur Drehachse 20 der Häckseltrommel 7 oder parallel zur Schneidkante 24 der Häckselmesser 8 am Trommelboden 21 und/oder der Trommelrückwand 22 positioniert ist. Die rechte untere Darstellung in Figur 2 zeigt nur beispielhaft die möglichen Ausrichtungen der Sensoranordnungen 23a, 23b in einer einzigen Darstellung. Vorzugsweise werden alle Sensoranordnungen 23a, 23b entweder parallel zur Drehachse 20 der Häckseltrommel 7 oder parallel zur Schneidkante 24 der Häckselmesser 8 positioniert sein. Im dargestellten Ausführungsbeispiel sind die Sensoranordnungen 23a, 23b als Induktionssensoren 25 ausgeführt, wobei jede Sensoranordnung 23 ein oder mehrere magnetische Erregeranordnungen 26 sowie jeweils eine mit diesen zusammenwirkende Polanordnung 27 umfasst.

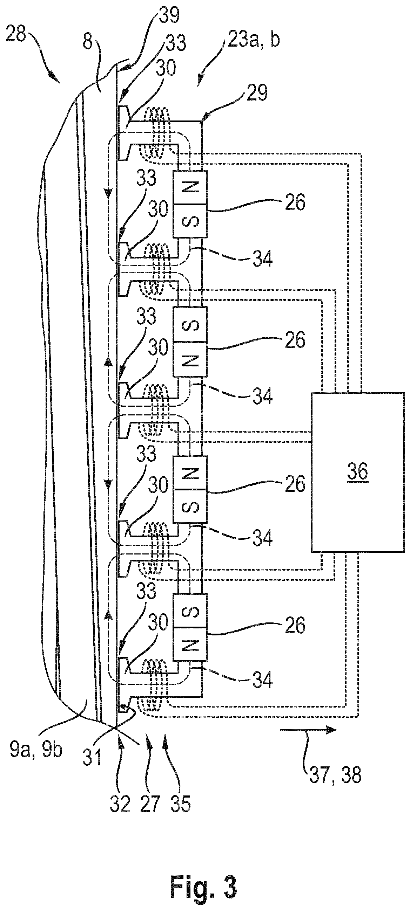

Figur 3 erläutert einige Eigenschaften der Sensoranordnungen 23a, 23b, wobei sich die weiteren Details zu den Sensoranordnungen aus der DE 10 2017 103 537 A1 ergeben, auf deren Offenbarungsgehalt hiermit vollumfänglich Bezug genommen wird. Eine Erfassungsanordnung 28 zur Erfassung eines Zustands, insbesondere Verschleißzustands, einer Häckselmesseranordnung 9a, 9b umfasst eine Vielzahl von Sensoranordnungen 23a, 23b, vorzugsweise für jede Häckselmesseranordnung 9a, 9b eine. Jede Sensoranordnung 23a, 23b wird von einer Vielzahl magnetischer Erregeranordnungen 26 gebildet, die mit einer Flussleiteinrichtung 29 gekoppelt sind. Die jeweilige Sensoranordnung 23a, 23b stellt jeweils eine Polanordnung 27 bereit, die mindestens einen magnetischen Pol 30, vorzugsweise fünf magnetische Pole 30, mit jeweils einer Polfläche 31 zum Ausleiten von Magnetfluss ausbildet. Bei einer Drehung der Häckseltrommel 7 passiert ein Häckselmesser 8 die jeweilige Polanordnung 27, wobei das die Polanordnung 27 jeweils passierende Häckselmesser 8 eine Luftspaltanordnung 32 mit mindestens einem Luftspalt 33 zu der Polanordnung 27 hin ausbildet und dadurch mindestens ein von der Erregeranordnung 26 erregter Magnetkreis 34 über das jeweilige Häckselmesser 8 geschlossen wird. Die Erfassungsanordnung 28 weist zudem eine Messanordnung 35 und eine Auswerteeinheit 36 auf. Die Messanordnung 35 erfasst mindestens eine magnetische Messgröße 37 betreffend den Magnetfluss, vorzugsweise eine induzierte Spannung 38, in mindestens einem von der Erregeranordnung 26 erregten Magnetkreis 34 und die Auswerteeinheit 36 ermittelt aus der mindestens einen erfassten Messgröße 37 den Verschleißzustand 39 des jeweiligen Häckselmessers 8.

Im Betrieb der Häckseltrommel 7 werden die Häckselmesser 8 gemäß der Drehrichtung der Häckseltrommel 7 an der jeweiligen Sensoranordnung 23a, 23b vorbeigeführt. Aufgrund der nahezu unmagnetischen Eigenschaften der vorzugsweise aus Edelstahl bestehenden Trommelrückwand 22 oder des Trommelbodens 21 durchdringen die von benachbarten magnetischen Polen 30 gebildeten Magnetkreise 34 das jeweils die Sensoranordnung 23a, 23b überstreichende Häckselmesser 8. Im dargestellten Ausführungsbeispiel bilden sich zwischen den fünf Polen 30 vier Magnetkreise 34 aus, die das jeweilige Häckselmesser in vier Abschnitten durchdringen. Für jeden dieser Abschnitte wird in der diesem zugeordneten Messanordnung 35 eine Spannung 38, die magnetische Messgröße 37, induziert. Die der Erfassungsanordnung 28 zugeordnete Auswerteinheit 36 ermittelt jeweils die abschnittsweise Induktionsspannung 38 und zeichnet diese auf. In diesem Zusammenhang liegt es im Rahmen der Erfindung, dass die jeweilige Sensoranordnung 23 mehr oder weniger als die offenbarten fünf magnetischen Pole 30 aufweist, sodass sich auch mehr oder weniger als die fünf induzierten Spannungen 38 ergeben können. Es liegt auch im Rahmen der Erfindung, dass die Spannungssignale 38 zu einem oder mehreren Spannungssignalen 38 je detektiertem Häckselmesser 8 zusammengefasst werden können.

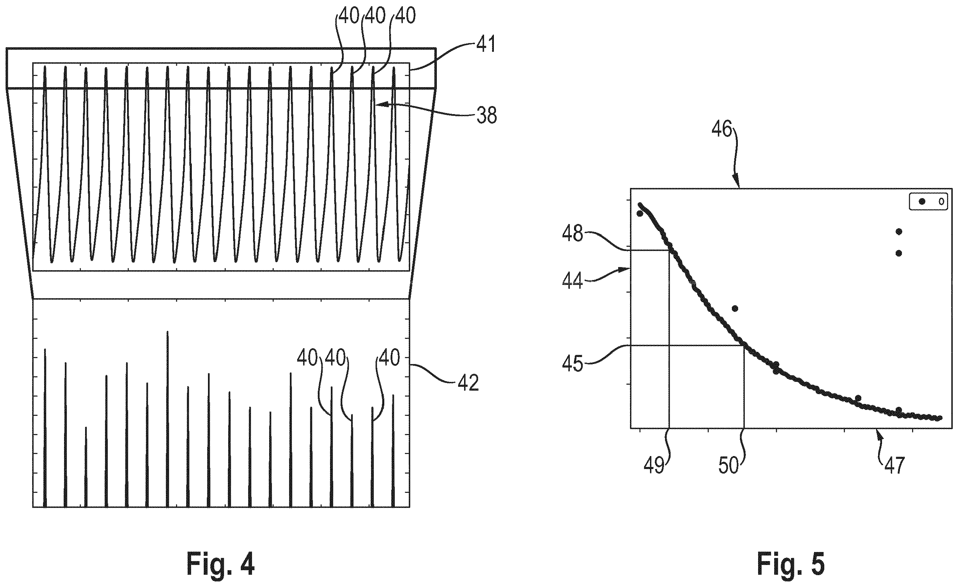

Fig. 4 zeigt im oberen Graph 41 ein Spannungssignal 38, welches in der Sensoranordnung 23 bei einer Umdrehung einer Häckseltrommel 7 induziert wurde. Das Spannungssignal 38 umfasst mehrere Pulse 40, die jeweils einen Anstieg der induzierten Spannung 38 und einen darauffolgenden Abfall der induzierten Spannung 38 beschreiben. Beim Ansteigen des Spannungssignals 38 eines Pulses 40 nähert sich ein Häckselmesser 8 dem Luftspalt 33 zwischen der Sensoranordnung 23 und der Häckseltrommel 7 an, bis dieses sich mittig innerhalb des Luftspalt 33 befindet. Der Abfall des Pulses 40 beschreibt das anschließende Herausführen des Häckselmessers 8 aus dem Luftspalt 33. Die maximale Amplitude eines Pulses 40 ist abhängig von dem Abstand des jeweiligen Häckselmesser 8 zu der Sensoranordnung 23. Der untere Graph 42 zeigt die maximalen Amplituden der Pulse des oberen Graphs 41 in einer vergrößerten Skalierung. Wie der untere Graph 42 der Fig. 4 näher zeigt, weisen die Amplituden der jeweiligen Pulse 40 des Spannungssignals 38 voneinander abweichende Maxima auf. Dies ist darauf zurückzuführen, dass die Häckselmesser 8 jeweils unterschiedliche Radien 43 der Häckseltrommel 7 bilden. Diese unterschiedlichen Radien 43 treten in aller Regel nach einem Austauschen der Häckselmesser 8 an der Häckseltrommel 7 auf. Im Wesentlichen sind diese auf Montagetoleranzen zurückzuführen. Aufgrund dieser unterschiedlichen Radien 43 weist die Trommel im Bereich der Häckselmesser 8 eine ungleichmäßige Rundheit auf. Erfindungsgemäß ist die Auswerteinheit 36 derart eingerichtet, sodass diese mittels des Spannungssignals 38 eine Kenngröße 44 für die Rundheit der Häckseltrommel 7 ermittelt. Mit sinkendem Wert der Kenngröße 44 nimmt die Rundheit der Häckseltrommel 7 im Bereich der Häckselmesser 8 zu. Mit anderen Worten nähert sich mit sinkender Kenngröße 44 die von den Häckselmessen 8 gebildeten maximalen Radien 43 der Häckseltrommel 7 einem für sämtliche Häckselmesser 8 geltenden einheitlichen Radius 43 an. Die Kenngröße 44 ergibt sich aus der Standardabweichung der maximalen Amplituden der Pulse 40.

Um eine gleichmäßigere Rundheit der Häckseltrommel 7 zu erreichen, werden die Häckselmesser 8 mittels der Messerschleifeinrichtung 17 eingeschliffen. Zur Ansteuerung der Messerschleifeinrichtung 17 ist die Steuereinrichtung 19 in signalübertragender Weise der Messerschleifeinrichtung 17 verbunden. Weiterhin ist die Steuereinrichtung 19 in signalübertragender Weise mit der Auswerteinheit 36 verbunden. In einer alternativen Ausgestaltung kann die Auswerteinheit 36 zugleich als Steuereinrichtung 19 zur Ansteuerung der Messerschleifeinrichtung 17 ausgebildet sein. Bei einem Schleifvorgang der Häckselmesser 8, insbesondere beim Einschleifen der Häckselmesser 8, steuert die Steuereinrichtung 19 die Messerschleifeinrichtung 17 derart an, sodass diese den Schleifvorgang der Häckselmesser 8 automatisch beendet, sobald die Kenngröße 44 einen Schwellwert 45 erreicht oder unterschreitet. Der Schwellwert 45 kann ein in der Steuereinrichtung 19 bereits hinterlegter Sollwert für die Kenngröße 44 sein. In einer alternativen Ausgestaltung kann der Schwellwert 45 von einem Bediener einstellbar sein.

Das in Fig. 5 dargestellte Kennfeld 46 beschreibt die Kenngröße 44 für die Rundheit in Abhängigkeit einer Anzahl von Schleifzyklen 47. Ein Schleifzyklus 47 besteht hierbei aus einer einzelnen Hin- und Herbewegung des Schleifsteins 18 der Messerschleifeinrichtung 17 in axialer Richtung der rotierenden Häckseltrommel 7. In iterativen Versuchen hat sich gezeigt, dass die Kenngröße 44 mit zunehmender Anzahl von Schleifzyklen 47 exponentiell abnimmt. Mittels des Kennfelds 46 kann die Steuerungseinrichtung 19 die erforderlichen Schleifzyklen 47 bis zum Erreichen des Schwellwerts 45 ermitteln. Hierfür ermittelt die Steuereinrichtung 19 zunächst mittels des Spannungssignals 38 einen Istwert 48 der Kenngröße 44. Im nächsten Schritt wird die Differenz aus den dem Istwert 48 zugeordneten Schleifzyklen 49 und den dem Schwellwert 45 zugeordneten Schleifzyklen 50 berechnet. Diese Differenz beschreibt die Anzahl der erforderlichen Schleifzyklen bis zum Erreichen des Schwellwerts 45.

### Bezugszeichenliste:

| | | | |
|---|---|---|---|
| 1 | Landwirtschaftliche Arbeitsmaschine | 34 | Magnetkreis |
| 2 | Feldhäcksler | 35 | Messanordnung |
| 3 | Erntevorsatz | 36 | Auswerteinheit |
| 4 | Einzugs- und Vorpresswalzen | 37 | magnetische Messgröße |
| 5 | Erntegutstrom | 38 | Spannungssignal |
| 6 | Häckseleinrichtung | 39 | Verschleißzustand |
| 7 | Häckseltrommel | 40 | Puls |
| 8 | Häckselmesser | 41 | Graph |
| 9 | Häckselmesseranordnung a... b | 42 | Graph |
| 10 | Einzugsbereich | 43 | Radius |
| 11 | Gegenschneide | 44 | Kenngröße |
| 12 | Cracker | 45 | Schwellwert |
| 13 | Nachzerkleinerungseinrichtung | 46 | Kennfeld |
| 14 | Nachbeschleunigungseinrichtung | 47 | Schleifzyklen |
| 15 | Auswurfkrümmer | 48 | Istwert |
| 16 | Auswurfkrümmerklappe | 49 | Schleifzyklus |
| 17 | Messerschleifeinrichtung | 50 | Schleifzyklus |
| 18 | Schleifstein | | |
| 19 | Steuereinrichtung | | |
| 20 | Drehachse Häckseltrommel | | |
| 21 | Trommelboden | | |
| 22 | Trommelrückwand | | |
| 23 | Sensoranordnung a...b | | |
| 24 | Schneidkante | | |
| 25 | Induktionssensor | | |
| 26 | magnetische Erregeranordnung | | |
| 27 | Polanordnung | | |
| 28 | Erfassungsanordnung | | |
| 29 | Flussleiteinrichtung | | |
| 30 | magnetischer Pol | | |
| 31 | Polfläche | | |
| 32 | Luftspaltanordnung | | |
| 33 | Luftspalt | | |

## Patentansprüche

1. Feldhäcksler (2) mit einer Häckseleinrichtung (6) umfassend eine Häckseltrommel (7) und dieser zugeordneten Häckselmessern (8) zum Zerkleinern von Erntegut, eine Messerschleifeinrichtung (17) zum Schärfen der Häckselmesser (8),
und einer Sensoranordnung (23), wobei zwischen der Sensoranordnung (23) und der Häckseltrommel (7) ein Luftspalt (33) ausgebildet ist,
wobei bei einer Drehung der Häckseltrommel (7) zumindest ein Teil der Häckselmesser (8) den Luftspalt (33) passiert und in der Sensoranordnung (23) ein Spannungssignal (38) induziert,
wobei der Feldhäcksler (2) eine Auswerteinheit (36) umfasst, die in signalübertragender Weise mit der Sensoranordnung (23) verbunden ist,
**dadurch gekennzeichnet, dass**
die Auswerteinheit (36) derart eingerichtet ist, sodass diese mittels des Spannungssignals (38) eine Kenngröße (44) für eine Rundheit der Häckseltrommel (7) ermittelt.

2. Feldhäcksler (2) nach Anspruch 1, **dadurch gekennzeichnet, dass** das Spannungssignal (38) eine Mehrzahl von Pulsen (40) umfasst, wobei vorzugsweise das Maximum eines Pulses (40) von dem Abstand eines Häckselmessers (8) zu der Sensoranordnung (23) abhängig ist.

3. Feldhäcksler (2) nach Anspruch 2, **dadurch gekennzeichnet, dass** die Kenngröße (44) einer Standartabweichung der Maxima der Mehrzahl der Pulse (40) entspricht.

4. Feldhäcksler (2) nach einem der Ansprüche 1 bis 3, **dadurch gekennzeichnet, dass** die Auswerteinheit (36) in signalübertragender Weise mit einer Steuereinrichtung (19) verbunden ist oder die Auswerteinheit (36) als Steuereinrichtung (19) ausgebildet ist, wobei die Steuereinrichtung (19) die Messerschleifeinrichtung (17) bei einem Schleifvorgang, insbesondere beim Einschleifen der Häckselmesser (8), derart ansteuert, sodass diese den Schleifvorgang der Häckselmesser (8) automatisch beendet, sobald die Kenngröße (44) einen Schwellwert (45) erreicht oder unterschreitet.

5. Feldhäcksler (2) nach Anspruch 4, **dadurch gekennzeichnet, dass** die Steuereinrichtung (19) zum Ermitteln einer Anzahl von Schleifzyklen bis zum Erreichen des Schwellwerts (45) eingerichtet ist.

6. Feldhäcksler (2) nach Anspruch 5, **dadurch gekennzeichnet, dass** zum Ermitteln der Anzahl von Schleifzyklen ein Kennfeld (46) in der Steuerungseinrichtung (19) hinterlegt ist, wobei das Kennfeld (46) die Kenngröße (44) für die Rundheit der Häckseltrommel (7) in Abhängigkeit von den Schleifzyklen der Messerschleifeinrichtung (17) beschreibt.

## Claims

1. Forage harvester (2) having a chopping device (6) comprising a chopping drum (7) and associated chopping knives (8) for shredding crops, a knife grinding device (17) for sharpening the chopping knives (8),
and a sensor arrangement (23), an air gap (33) being formed between the sensor arrangement (23) and the chopping drum (7),
with a rotation of the chopping drum (7) resulting in at least some of the chopping knives (8) passing through the air gap (33) and inducing a voltage signal (38) in the sensor arrangement (23),
the forage harvester (2) comprising an evaluation unit (36) connected to the sensor arrangement (23) in a signal-transmitting manner,
**characterized in that**
the evaluation unit (36) is configured in such a way that it determines a characteristic value (44) for a roundness of the chopping drum (7) by means of the voltage signal (38).

2. Forage harvester (2) according to Claim 1, **characterized in that** the voltage signal (38) comprises a plurality of pulses (40), the maximum of a pulse (40) preferably being dependent on the distance of a chopping knife (8) from the sensor arrangement (23).

3. Forage harvester (2) according to Claim 2, **characterized in that** the characteristic variable (44) corresponds to a standard deviation of the maxima of the plurality of pulses (40).

4. Forage harvester (2) according to any of Claims 1 to 3, **characterized in that** the evaluation unit (36) is connected to a control device (19) in a signal transmitting manner or the evaluation unit (36) is designed as a control device (19), the control device (19) actuating the knife grinding device (17) during a grinding operation, in particular during honing of the chopping knives (8), in such a way that it automatically terminates the grinding operation of the chopping knives (8) as soon as the characteristic variable (44) reaches or falls below a threshold value (45).

5. Forage harvester (2) according to Claim 4, **characterized in that** the control device (19) is configured to determine a number of grinding cycles until the threshold value (45) is reached.

6. Forage harvester (2) according to Claim 5, **characterized in that**, in order to determine the number of grinding cycles, a characteristic map (46) is stored in the control device (19), the characteristic map (46) describing the characteristic variable (44) for the roundness of the chopping drum (7) depending on the grinding cycles of the knife grinding device (17).

## Revendications

1. Récolteuse-hacheuse (2) dotée d'un dispositif de hachage (6) comprenant un tambour hacheur (7) et des couteaux de hachage (8) associés à celui-ci et destinés à hacher des produits récoltés, un dispositif d'affûtage de couteaux (17) pour l'affûtage des couteaux de hachage (8),
et d'un dispositif à capteur (23), un espace (33) étant formé entre le dispositif à capteur (23) et le tambour hacheur (7),
sachant que lors d'une rotation du tambour hacheur (7), au moins une partie des couteaux de hachage (8) passe devant l'espace (33) et induit un signal de tension (38) dans le dispositif à capteur (23),
la récolteuse-hacheuse (2) comprenant une unité d'évaluation (36) qui est reliée au dispositif à capteur (23) de manière à transmettre des signaux,
**caractérisée en ce que**
l'unité d'évaluation (36) est conçue de manière à ce que celle-ci détermine, à l'aide du signal de tension (38), une grandeur caractéristique (44) pour la circularité du tambour hacheur (7)

2. Récolteuse-hacheuse (2) selon la revendication 1, **caractérisée en ce que** le signal de tension (38) comporte une pluralité d'impulsions (40), le maximum d'une impulsion (40) étant de préférence fonction de la distance d'un couteau de hachage (8) par rapport au dispositif à capteur (23).

3. Récolteuse-hacheuse (2) selon la revendication 2, **caractérisée en ce que** la grandeur caractéristique (44) correspond à un écart standard des maximums de la pluralité des impulsions (40).

4. Récolteuse-hacheuse (2) selon une des revendications 1 à 3, **caractérisée en ce que** l'unité d'évaluation (36) est reliée à un dispositif de commande (19) de manière à transmettre des signaux, ou l'unité d'évaluation (36) est réalisée comme dispositif de commande (19), le dispositif de commande (19) activant le dispositif d'affûtage de couteaux (17) lors d'une opération d'affûtage, notamment lors du rodage des couteaux de hachage (8), de manière à ce que celui-ci termine automatiquement l'opération d'affûtage des couteaux de hachage (8) dès que la grandeur caractéristique (44) atteint ou dépasse vers le bas une valeur seuil (45).

5. Récolteuse-hacheuse (2) selon la revendication 4, **caractérisée en ce que** le dispositif de commande (19) est conçu pour déterminer un nombre de cycles d'affûtage jusqu'à ce que la valeur seuil (45) soit atteinte.

6. Récolteuse-hacheuse (2) selon la revendication 5, **caractérisée en ce que**, pour déterminer le nombre de cycles d'affûtage, un diagramme caractéristique (46) est enregistré dans le dispositif de commande (19), le diagramme caractéristique (46) décrivant la grandeur caractéristique (44) pour la circularité du tambour hacheur (7), en fonction des cycles d'affûtage du dispositif d'affûtage de couteaux (17).
